# FASCICULE DE BREVET EUROPEEN

(11) **EP 0 997 042 B1**
(45) Date de publication et mention de la délivrance du brevet: **09.04.2003**
(21) Numéro de dépôt: 98931874.6
(22) Date de dépôt: 15.07.1998
(51) Int. Cl.: H04N 7/26, H04N 7/52

(54) **PROCEDE DE MARQUAGE D'UN SIGNAL NUMERIQUE VIDEO COMPRESSE**
VERFAHREN ZUR MARKIERUNG EINES KOMPRIMIERTEN DIGITALVIDEOSIGNALS
METHOD FOR MARKING A COMPRESSED DIGITAL VIDEO SIGNAL

(30) Priorité: 18.07.1997 CH 176597
(43) Date de publication de la demande: 03.05.2000
(73) Titulaire: ECOLE POLYTECHNIQUE FEDERALE DE LAUSANNE, 1015 Lausanne (CH)
(72) Inventeur: KUTTER, Martin, CH-1802 Corseaux (CH); JORDAN, Frédéric, CH-1619 Les Paccots (CH); EBRAHIMI, Touradj, CH-1009 Pully (CH)
(74) Mandataire: Ganguillet, Cyril
(86) Numéro de dépôt international: CH9800310
(87) Numéro de publication internationale: WO99004570

(56) Documents cités:
- EP-A- 0 762 417
- SCHYNDEL VAN R G ET AL: "A DIGITAL WATERMARK" PROCEEDINGS OF THE INTERNATIONAL CONFERENCE ON IMAGE PROCESSING (IC, AUSTIN, NOV. 13 - 16, 1994, vol. 2, no. CONF. 1, 13 novembre 1994, pages 86-90, XP000522615 INSTITUTE OF ELECTRICAL AND ELECTRONICS ENGINEERS cité dans la demande

## Description

### Domaine technique

La présente invention a trait au marquage de signaux vidéo et en particulier concerne un procédé de marquage d'un signal numérique vidéo compressé par introduction d'une signature numérique noyée dans le signal vidéo.

Les possibilités de transmission d'images au moyen des nouveaux médias tels qu'Internet et les télévisions par satellite impliquent que le volume des données qui s'échangent et en particulier les images vidéo, va en s'amplifiant.

Parallèlement, les développements récents dans le domaine de la télévision et de la vidéo numériques, permettent non seulement une sensible amélioration de la qualité des images, mais également la réalisation de copies de qualité identique à l'original, sans qu'il soit possible de distinguer la copie de l'original.

C'est pourquoi des recherches ont été entreprises dans le but de permettre d'identifier de façon certaine l'auteur d'une image vidéo, afin de lui permettre de faire valoir ses droits vis à vis de diffuseurs non autorisés.

### Technique antérieure

On connaît des procédés de protection des images vidéo qui consistent à y introduire une signature numérique en modifiant légèrement les données de façon à pouvoir retrouver ladite signature. Cette signature peut ensuite être utilisée pour identifier l'auteur de l'image. Deux techniques principales de signature ont été utilisées jusqu'ici. La plus simple consiste à moduler la luminance d'un pixel choisi pseudo-aléatoirement. Cette technique est utilisée en particulier pour des images en tons de gris (grey scale images) et est décrite notamment dans l'article de R.G. van Schnydel, et al. ("Digital watermark," *Proceedings of the 1994 1st IEEE International Conférence on Image Processing,* Vol.2, pp. 86-90, 1994).

Des techniques plus complexes ont également été proposées, dans lesquelles l'image est coupée en blocs avec une modulation d'amplitude et une taille de bloc qui sont eux-mêmes modulés par l'énergie locale. Des techniques adaptées aux images noir et blanc ont été proposées par K. Matsui, et al. ("How to secretely imbed a signature on a picture," *The Journal of the interactive Multimédia* *Association Intellectual Property Project,* Vol. 1, No. 1, pp. 187-206, January 1994). Dans l'article de W. Bender, et al. ("Techniques for Data Hiding," *Proceedings of the SPIE*, 2420:40, February 1995), la différence entre la valeur de luminance des pixels est utilisée. Alors que ce dernier article propose de duplifier les régions texturées et d'utiliser ensuite un calcul d'autocorrélation, une technique très souvent utilisée est la modification des coefficients DCT générés par les encodeurs JPEG (S. Burgett, et al. "A Novel Method for Copyright Labelling Digitized Image Data," *IEEE Transactions on Communications,* September 1994) ou MPEG-2. Ces deux techniques sont respectivement bien adaptées pour des images couleur ou des images couleur animées. Un autre example est donné dans le document EP-A-0 762 417.

Le nombre de bits générés par les images dans la transmission d'informations vidéo nécessite un taux de compression élevé. Dans ce domaine, le format MPEG s'est rapidement imposé et est devenu un standard international, la plupart des appareils professionnels traitant les signaux vidéo sous cette forme.

Une technique d'identification propre à MPEG utilise une partie du signal compressé pour des informations destinées à identifier le fournisseur, ainsi qu'un bit, dit de protection, indiquant que l'image est protégée et que toute copie en est interdite. Toutefois, ces éléments n'offrent aucune sécurité puisque, leur position étant clairement définie dans la norme MPEG, il est très facile de les supprimer.

Comme on l'a mentionné plus haut, la présente invention a trait à un procédé de marquage d'un signal numérique vidéo compressé par introduction d'une signature numérique noyée dans le signal vidéo.

Un tel procédé ne présente un intérêt que si la signature ne peut pas être effacée facilement et si elle peut supporter les manipulations telles que compression et décompression, fonction zoom et déplacement d'images, cette signature ne devant bien entendu modifier le signal vidéo que d'une manière imperceptible.

On sait que la norme MPEG est basée sur une analyse de l'évolution des différentes trames et de la transmission de ces différences. Il a notamment été observé que, d'une image à l'autre, un grand nombre d'informations ne changent pas, voire se retrouvent dans un plan légèrement différent. A cet effet, l'encodeur MPEG décompose l'image en blocs, usuellement de 8 par 8 pixels, des opérations de comparaison étant effectuées sur ces blocs. En particulier, de telles opérations se rapportent à la DCT, à la DFD et aux vecteurs de mouvement. Les versions les plus récentes de MPEG permettent de réunir un ensemble de blocs et d'effectuer des opérations sur cet ensemble de blocs appelé région.

La DCT (Discrete Cosinus Transform) est une transformée en Cosinus Discret qui permet d'obtenir les amplitudes des différentes fréquences qui composent une image. Son intérêt réside dans le fait qu'il est alors possible de compresser sélectivement les différentes bandes des fréquences de manière à minimiser la distorsion visuelle. Elle est en général faite sur des blocs de taille réduite (typiquement 8x8). Cette transformation est appliquée à tous les blocs composants l'image. Elle est suivie d'une étape de quantification et de codage entropique.

La DFD (Displaced Frame Difference) représente la différence entre l'image prédite par le modèle translationnel et l'image réelle.

Le codage DCT est appliqué pour transmettre les informations de type DFD .

Les vecteurs de mouvement sont utilisés lorsque, d'une trame à l'autre, un même bloc se retrouve légèrement décalé. Dans ce cas, le format MPEG permet d'indiquer qu'un bloc présent dans l'image précédente se retrouve dans l'image en cours de façon légèrement décalée dans le plan, d'une valeur correspondant aux coefficients X et Y. Ce principe autorise des erreurs, c'est-à-dire que dans le cas où une petite partie du nouveau bloc ainsi recréé est différente, le vecteur de mouvement sera accompagné d'une information DFD contenant les différences entre le bloc précédent déplacé et les informations visuelles réelles de ce nouveau bloc.

De précédentes expériences de marquage ont mis en oeuvre les coefficients DCT afin d'intégrer la signature à un signal vidéo compressé. Cette technique présente toutefois une grande sensibilité au cadrage de l'image, et un déplacement d'un ou deux pixels a pour résultat des coefficients DCT différents, ce qui rend l'extraction de la signature impossible. Cet inconvénient est d'autant plus gênant que certains appareils de traitement vidéo provoquent un décalage d'un pixel sur le signal vidéo produit.

### Exposé de l'invention

Le but de la présente invention est de proposer un procédé de marquage d'un signal numérique vidéo compressé par l'introduction d'une signature noyée dans le signal numérique, qui soit robuste, invisible et reconnaissable en temps réel.

A cet effet, l'invention concerne un procédé de marquage d'un signal numérique vidéo compressé par introduction d'une signature numérique noyée dans le signal vidéo compressé, ledit signal représentant une série d'au moins deux images vidéo, chacune des images étant divisée en une pluralité de régions, ledit signal comprenant des vecteurs de mouvement représentant le mouvement des régions entre la première et la deuxième image, le procédé étant caractérisé en ce que l'on modifie au moins l'un des coefficients X ou Y d'au moins un des dits vecteurs de mouvement, une région pouvant consister en un bloc.

Selon un mode d'exécution, on sélectionne un jeu de vecteurs de mouvements MV(i) ayant un faible impact visuel, de préférence un jeu de vecteurs dont la norme est inférieure à un seuil R, par exemple un seuil R égal à 5.

Selon une première variante, on sélectionne un jeu de vecteurs contenu dans une trame précédant une trame contenant toutes les informations de l'image (trame du type I).

Selon une deuxième variante, on modifie le jeu de vecteurs de mouvement MV(i) selon une sélection pseudo-aléatoire modulée par une clé, la signature pouvant comporter une pluralité de bits S(i) et au moins l'un des dits coefficients X ou Y des vecteurs de mouvement pouvant être modifiés selon au moins un des bits de la signature, le procédé pouvant comporter en outre les étapes suivantes:
générer un nombre aléatoire A initialisé par un paramètre issu du signal vidéo, comportant le même nombre de bits que S,
modifier l'un des coefficients X ou Y de telle sorte que celui-ci soit signé avec le bit "1" si plus de la moitié des bits de A sont identiques à S ou avec le bit "0" dans le cas contraire.

Le paramètre initialisant le nombre aléatoire peut être une combinaison mathématique de la norme du vecteur de mouvement à modifier.

On peut modifier les coefficients X ou Y des vecteurs de mouvement entre la deuxième et la troisième trame d'une proportion inverse à celle de la modification effectuée entre la première et la deuxième trame.

Le procédé selon l'invention présente l'avantage d'être très robuste, puisque seule la connaissance du signal vidéo original permet de découvrir les vecteurs qui ont été modifiés. L'image elle-même ayant été modifiée, le traitement ultérieur de ce signal ne peut pas voir sa signature effacée.

Le procédé comprend essentiellement deux étapes: la sélection des régions et la modification des vecteurs de mouvement.

### Description du procédé

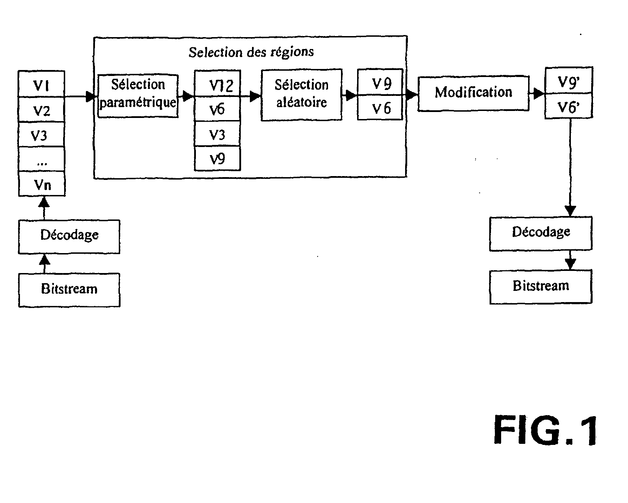

La description qui suit, donnée à titre d'exemple, se réfère au dessin dans lequel la Fig.1 est un schéma illustrant les étapes du procédé.

### Sélection des régions à signer

Une première sélection des vecteur candidats susceptibles d'être signés est réalisée en utilisant des paramètres liés aux caractéristiques de la vidéo.

Il a été démontré que la perception visuelle s'accommode facilement de changements effectués dans des régions en mouvement. De ce fait, le choix de modifier des vecteurs de mouvement s'avère propice puisque ceux-ci se réfèrent à des régions en mouvement. Les modifications induites par le procédé de codage sont noyées dans la dynamique de l'image. De plus, en sélectionnant d'une manière particulière les vecteurs de mouvement, la visibilité de ces modifications peut être encore minimisée.

Il convient de noter également que cette signature est répartie sur toute l'image considérée et non pas concentrée dans une région de l'écran comme on peut l'observer dans d'autres systèmes de codage. De plus, pour autant que le nombre de vecteurs de mouvement soit suffisant, la signature est reproduite en plusieurs exemplaires dans une trame et cela sur chaque trame contenant des vecteurs de mouvement. Dans le cas où le nombre de vecteurs est inférieur au nombre de bits de la signature, celle-ci est répartie sur plusieurs trames. Ceci a pour conséquence que, même lorsqu'on utilise un extrait du signal vidéo, la signature pourra être recherchée.

Il serait d'autre part préjudiciable à l'effet visuel de modifier toujours les mêmes vecteurs dans les trames successives. Bien que le nombre de trames séparant deux trames contenant toutes les informations de l'image soit en général inférieur à 10, les accumulations de l'erreur qu'induit la signature peuvent devenir visible. Pour palier à de tels défauts, plusieurs solutions peuvent être mises en oeuvre, soit individuellement, soit collectivement :
- choisir une trame contenant des vecteurs de mouvement qui précède une trame contenant toute l'image;
- choisir des blocs dont la modification sera peu visible. Par exemple ceux dont la norme L du vecteur est comprise dans un certain intervalle. Cette norme peut être calculée de la manière suivante : L0 = sup(X,Y) ou L1 = |X|+|Y| ou L2 = Sqrt(X*X+Y*Y) avec Sqrt désignant la fonction racine carrée; et où X et Y sont les coefficients du vecteur de mouvement;
- choisir un jeu de vecteurs très différents d'une trame à l'autre afin d'éviter l'accumulation de dérive;
- compenser la modification dans la trame suivante, dans la mesure où un vecteur concernant un bloc identique existe.

Après la sélection d'un jeu de vecteurs répondant aux critères énoncés ci-dessus, l'étape suivante est de faire intervenir la clé qui va définir quels sont les vecteurs qui participeront au codage. Cette clé doit non seulement permettre de choisir les vecteurs, mais également l'ordre de leur intervention au moment du codage. A cet effet, tous les vecteurs sont listés et l'ordre de leurs interactions avec la signature va être modulé avec la clé. Pour ce faire, on prélève aléatoirement un certain nombre de vecteurs de mouvements de la sélection obtenue précédemment. Le générateur aléatoire est initialisé par la clé. Cette initialisation peut être réalisée par une clé dite publique, commune à toutes les vidéos signées, ou une clé dite privée pour identifier d'une manière unique cette séquence vidéo. On peut bien entendu utiliser les deux clés pour signer une séquence vidéo.

### Modification des vecteurs de mouvement

### Méthode de modification

Une méthode simple consiste à modifier le coefficient X, ou le coefficient Y, selon le bit à cacher par une opération de substitution du bit de poids faible de ce coefficient. Ce coefficient aura ainsi alors une valeur paire si le bit est zéro ou impaire si le bit est 1.

### Signature directe

Selon le procédé de l'invention, on introduit une signature numérique, par exemple un mot de 32 bits dans un signal vidéo compressé. A cet effet, les coefficients X ou Y des vecteurs de mouvement sélectionnés sont modifiés en fonction de la valeur du bit de la clé. Afin d'obtenir un marquage robuste, on peut par exemple sélectionner 10 vecteurs représentant des mouvements de bloc répartis sur toute la surface de l'image et les modifier en fonction de la valeur de la signature. Ceci nous donne la possibilité d'intégrer 20 bits de la signature dans les coefficients X et Y dans le cas où l'on choisit de modifier les deux coefficients. Si le nombre de bits est supérieur aux nombre de coefficients susceptibles d'être signés dans une image donnée, on peut répartir la signature sur plusieurs images. Par exemple, on peut signer 1 bloc/image et utiliser 10 images pour cacher 10 bits. Lorsque les 32 bits de la signature sont utilisés, on recommence avec le premier bit, assurant ainsi une plus grande sécurité du codage, même si la copie ne se fait que sur une partie de la séquence vidéo.

### Signature probabiliste

Une autre technique, beaucoup plus sûre, permet de s'affranchir totalement des problèmes de synchronisation. Cette technique comporte les étapes suivantes, pour l'insertion d'une signature S:
1. Sélectionner un vecteur selon les critères de sélection exposés précédemment.
2. Générer une nombre aléatoire A comportant le même nombre de bits que S en utilisant un paramètre de la vidéo pour initialiser le générateur aléatoire. Par exemple la norme du vecteur de mouvement.
3. Modifier l'un des coefficients X ou Y de manière à signer ce coefficient avec le bit "1" si plus de la moitié des bits du nombre A sont identiques à S, soit d(S, A) < d(S, NOT(A)), ou avec le bit "0" dans le cas contraire, où : NOT est la fonction Booléenne de Négation, d() est la distance définie entre la signature S et le nombre A comme: d(S,A) = Sum(Abs(S(i)-A(i)), Abs() étant la fonction valeur absolue et Sum() la somme portant sur tous les bits de la signature.

On peut démontrer que cet algorithme permet de retrouver la signature par convergence statistique.

Cette technique fonctionne quelle que soit la position spatio-temporelle des blocs dans la vidéo. Cela signifie qu'aucune synchronisation entre les bits de signature et les blocs sélectionnés n'est plus nécessaire. La suppression de parties de l'image ou de trames entières a pour seules conséquences la diminution de la fiabilité de la signature retrouvée et l'augmentation du nombre de trames pour de retrouver la signature.

Les données vidéo peuvent être n'importe quelles données facilement accessibles dans le signal vidéo (valeur de vecteurs de mouvement, coefficients DC, etc.).

La figure 1 illustre un exemple de mise en oeuvre du procédé de signature selon l'invention. On effectue un premier décodage entropique du signal vidéo (bitstream), puis on extrait les vecteurs de mouvement. Après une première sélection effectuée selon les critères visuels exposés précédemment, une deuxième sélection, dépendant de la clé est effectuée. On modifie les coefficients des vecteurs ainsi sélectionnés, selon la méthode directe ou la méthode probabiliste décrites ci-dessus. Un codage entropique avec les nouveaux vecteurs permet d'obtenir le signal vidéo compressé au format initial MPEG.

### Signature dans le cas d'une séquence mixte d'images codées Inter/Intra

Il va de soi que pour mener à bien cette opération, la présence de vecteurs de mouvement est indispensable. A cet effet, MPEG comprend trois types de trames, à savoir des trames du type I (Intra) contenant toutes les informations de l'image, sans référence aux images passées, des trames du type B (Interpolated) et des trames du type P (Predicted). ces deux derniers types de trames contenant des informations exprimant les différences par rapport à la trame précédente et pouvant contenir des vecteurs de mouvement X et Y.

Les trames d'une séquence sont organisées en groupes d'images (GOP : Group Of Pictures), chaque groupe commençant toujours par une trame du type I. La présence d'une trame du type I dans chaque groupe est nécessaire. En effet, si, pour une séquence vidéo donnée, l'on ne transmettait que des trames du type B ou P, exprimant des différences, cela serait certainement avantageux en terme de quantité d'informations transmises, mais empêcherait tout décodage dans le cas où la première image n'aurait pas été reçue.

Un groupe d'images (GOP) est composé généralement de huit à dix trames. Ce nombre de trames n'est pas imposé par la norme MPEG. Toutefois, il ne dépasse en général pas 16 afin de ne pas nuire à la fiabilité de la transmission.

Exemple de groupes d'images (GOP) :

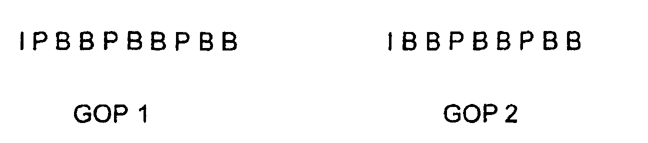

Le procédé de reconnaissance de la signature repose sur la présence de vecteurs de mouvement dans les trames des types P ou B. Comme on a dit plus haut, ce sont ces vecteurs de mouvement que l'on modifie pour introduire la signature. Il se peut que, lors de certaines étapes comme le montage d'une séquence vidéo, le signal soit uniquement composé des trames du type I et rende momentanément la signature impossible à détecter, bien qu'étant toujours présente dans le signal vidéo. En revanche, les impératifs de largeur de bande disponible lors du réencodage d'une telle séquence en vue de son transport sur un support gravé (CD) ou diffusé (TV), vont faire nécessairement réapparaître le codage différentiel.

On a déjà indiqué que le nombre de trames dans un groupe d'images (GOP) peut varier suivant le module de compression utilisé. De ce fait, si l'on décompresse un signal vidéo compressé signé selon le procédé de l'invention et qu'on le recompresse avec un nombre différent de trames par groupe, certaines trames auront des vecteurs totalement différents de ceux présents lors du marquage.
Signal lors du marquage avec 8 trames par groupe:

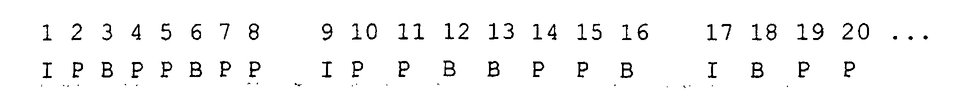

Signal lors d'une recompression avec 10 trames par groupe:

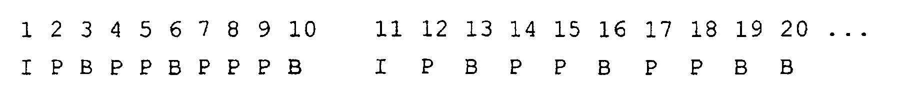

On constate que les vecteurs encodés à la trame 11 ont disparu car la nouvelle trame 11 est du type I. Ceci est toutefois temporaire puisque la trame 12 va contenir des informations de différence par rapport à la trame précédente et donc faire réapparaître les vecteurs de mouvement.

Le procédé selon l'invention présente en outre le grand avantage de permettre l'authentification en temps réel d'une vidéo signée avec le procédé. Les opérations de reconnaissance sont simples, puisqu'elles exploitent directement les vecteurs de mouvement contenus dans le signal.

Si, contre toute attente, le signal à authentifier ne comportait plus de vecteurs de mouvement, il reste toujours la possibilité de le décompresser, de façon à obtenir un signal vidéo conventionnel, puis de le recompresser de manière à faire réapparaître les vecteurs de mouvement. Bien entendu, dans ce cas, la possibilité de reconnaître une signature en temps réel disparaît.

### Autres avantages du procédé

La signature ou la lecture des vecteurs de mouvement requiert une puissance de calcul négligeable comparée à l'opération de codage ou même de décodage. Ceci est dû à l'absence de transformée mathématique comme il peut en exister dans d'autres méthodes (DCT, Estimation de mouvement, etc.). Ceci a pu être expérimentalement constaté sur un encodeur MPEG-4. Son implantation au sein de systèmes de codage aura donc un impact minime sur le prix de revient du produit. Ceci est à comparer avec un système qui ne pourrait pas travailler directement dans le domaine compressé. Une technique de ce type nécessiterait un supercalculateur, par exemple de type Cray, pour signer une vidéo avec un débit insuffisant de 5 trames/seconde.

La signature n'introduit qu'une modification infime de taille de la vidéo compressée. Dans le cas des systèmes basés sur la DCT il faut prévoir des procédures beaucoup plus complexes pour limiter l'augmentation du débit numérique lié à l'introduction de la signature. Le procédé selon l'invention pourra donc être placé sur une ligne de transmission de vidéo de manière à n'avoir aucun impact significatif sur le délai ou le débit de la transmission.

Les vecteurs de mouvement sont intrinsèquement relatifs au mouvement présent dans la vidéo. En conséquence un cadrage de l'image différent, tel que le déplacement latéral de deux bits, ne peut détruire la signature. Ceci a été testé avec des translations de quelques pixels et des rotations de 2 à 3 degrés.

La méthode est exceptionnellement robuste à la compression. Ceci est dû au fait que la compression des images vidéo se fait essentiellement par quantification de la DFD. Si cette quantification diminue l'énergie de la DFD, la fiabilité de l'extraction de la signature s'en trouve renforcée. (Les tests montrent une robustesse à des débits de 1 Mbits/s, en CCIR601 10 trames/s).

## Revendications

1. Procédé de marquage d'un signal numérique vidéo compressé par introduction d'une signature numérique noyée dans le signal vidéo compressé, ledit signal représentant une série d'au moins deux images vidéo, chacune des images étant divisée en une pluralité de régions, ledit signal comprenant des vecteurs de mouvement représentant le mouvement des régions entre la première et la deuxième image, **caractérisé en ce que** l'on modifie au moins l'un des coefficients X ou Y d'au moins un des dits vecteurs de mouvement.

2. Procédé selon la revendication 1, **caractérisé en ce que** l'on sélectionne un jeu de vecteurs de mouvements MV(i) ayant un faible impact visuel.

3. Procédé selon la revendication 2, **caractérisé en ce que** l'on sélectionne un jeu de vecteurs dont la norme est inférieure à un seuil R.

4. Procédé selon la revendication 2, **caractérisé en ce que** ledit seuil R est égal à 5.

5. Procédé selon la revendication 2, **caractérisé en ce que** l'on sélectionne un jeu de vecteurs contenu dans une trame précédant une trame contenant toutes les informations de l'image (trame du type I).

6. Procédé selon la revendication 2, **caractérisé en ce que** l'on modifie le jeu de vecteurs de mouvement MV(i) selon une sélection pseudo-aléatoire modulée par une clé.

7. Procédé selon la revendication 6, **caractérisé en ce que** la signature comporte une pluralité de bits S(i) et **en ce que** l'on modifie au moins l'un des dits coefficients X ou Y des vecteurs de mouvement selon au moins un des bits de la signature.

8. Procédé selon la revendication 7, **caractérisé en ce qu'**il comporte en outre les étapes suivantes:
générer un nombre aléatoire A initialisé par un paramètre issu du signal vidéo, comportant le même nombre de bits que S,
modifier l'un des coefficients X ou Y de telle sorte que celui-ci soit signé avec le bit "1" si plus de la moitié des bits de A sont identiques à S ou avec le bit "0" dans le cas contraire.

9. Procédé selon la revendication 8, **caractérisé en ce que** le paramètre initialisant le nombre aléatoire est une combinaison mathématique de la norme du vecteur de mouvement à modifier.

10. Procédé selon la revendication 1, **caractérisé en ce qu'**une région consiste en un bloc.

11. Procédé selon l'une des revendications précédentes, **caractérisé en ce que** l'on modifie les coefficients X ou Y des vecteurs de mouvement entre la deuxième et la troisième trame d'une proportion inverse à celle de la modification effectuée entre la première et la deuxième trame.

## Claims

1. A method of watermarking a compressed digital video signal by incorporating a digital signature embedded in the compressed video signal, the said signal representing a series of at least two video images, each of the images being divided into a plurality of regions, the said signal comprising motion vectors representing the movement of the regions between the first and second images, **characterised in that** at least one of the coefficients X or Y of at least one of the said motion vectors is modified.

2. A method according to claim 1, **characterised in that** a set of motion vectors MV(i) with a low visual impact is selected.

3. A method according to claim 2, **characterised in that** a set of vectors whose norm is lower than a threshold R is selected.

4. A method according to claim 2, **characterised in that** the said threshold R is equal to 5.

5. A method according to claim 2, **characterised in that** a set of vectors is selected from a frame preceding a frame containing all the image information (type I frame).

6. A method according to claim 2, **characterised in that** the set of motion vectors MV(i) is modified according to a pseudo-random selection modulated by a code.

7. A method according to claim 6, **characterised in that** the signature comprises a plurality of bits S(i) and **in that** at least one of the said coefficients X or Y of the motion vectors is modified in accordance with at least one of the bits of the signature.

8. A method according to claim 7, **characterised in that** it also includes the following steps:
generating a random number A initialised by a parameter issuing from the video signal, comprising the same number of bits as S,
modifying one of the coefficients X or Y so that it is signed with the bit "1" if more than half of the bits of A are identical to S or with the bit "0" in the contrary case.

9. A method according to claim 8, **characterised in that** the parameter initialising the random number is a mathematical combination of the norm of the movement vector to be modified.

10. A method according to claim 1, **characterised in that** a region consists of a block.

11. A method according to one of the preceding claims, **characterised in that** a modification is made to the coefficients X or Y of the motion vectors between the second and third frames by a proportion which is the inverse of that of the modification made between the first and second frames.

## Patentansprüche

1. Verfahren zur Kennzeichnung eines numerischen komprimierten Video-Signals durch Einführung einer numerischen Kennzeichnung, die in das komprimierte Video-Signal eingeprägt ist, wobei das besagte Signal eine Reihe von mindestens zwei Videobildern darstellt, wobei jedes der Bilder in eine Vielzahl von Bereichen aufgeteilt ist und das besagte Signal Bewegungsvektoren umfaßt, die die Bewegung der Bereiche zwischen dem ersten und dem zweiten Bild darstellen, **dadurch gekennzeichnet, dass** man mindestens einen der Koeffizienten X oder Y mindestens eines der besagten Bewegungsvektoren abändert.

2. Verfahren nach Anspruch 1, **dadurch gekennzeichnet, dass** man einen Satz von Bewegungsvektoren MV(i) auswählt, der eine geringe visuelle Wirkung hat.

3. Verfahren nach Anspruch 2, **dadurch gekennzeichnet, dass** man einen Satz von Vektoren auswählt, deren Norm kleiner als ein Schwellwert R ist.

4. Verfahren nach Anspruch 2, **dadurch gekennzeichnet, dass** der besagte Schwellwert R gleich 5 ist.

5. Verfahren nach Anspruch 2, **dadurch gekennzeichnet, dass** man einen Satz von Vektoren auswählt, der in einem Teilbild enthalten ist, welches einem Teilbild vorausgeht, das alle Bildinformationen enthält (Teilbild vom Typ I).

6. Verfahren nach Anspruch 2, **dadurch gekennzeichnet, dass** man den Satz von Bewegungsvektoren MV(i) gemäß einer durch einen Schlüssel modulierten pseudo-stochastischen Auswahl abändert.

7. Verfahren nach Anspruch 6, **dadurch gekennzeichnet, dass** die Kennzeichnung eine Vielzahl von Bits S(1) enthält, und dadurch, dass man mindestens einen der besagten Koeffizienten X oder Y der Bewegungsvektoren gemäß mindestens einem der Bits der Kennzeichnung abändert.

8. Verfahren nach Anspruch 7, **dadurch gekennzeichnet, dass** es außerdem die folgenden Etappen umfasst:
Erzeugen einer zufälligen Zahl A, initialisiert durch einen Ausgangsparameter des Video-Signals, der dieselbe Anzahl von Bits enthält wie S,
Abändern eines der Koeffizienten X oder Y dergestalt, dass dieser mit dem Bit ,1' gekennzeichnet wird, wenn mehr als die Hälfte der Bits von A mit S identisch sind, oder mit dem Bit ,0' im entgegengesetzten Fall.

9. Verfahren nach Anspruch 8, **dadurch gekennzeichnet, dass** der Parameter, der die zufällige Zahl initialisiert, eine mathematische Kombination der Norm des abzuändernden Bewegungsvektors ist.

10. Verfahren nach Anspruch 1, **dadurch gekennzeichnet, dass** ein Bereich aus einem Block besteht

11. Verfahren nach einem der vorangegangenen Ansprüche, **dadurch gekennzeichnet, dass** man die Koeffizienten X oder Y der Bewegungsvektoren zwischen dem zweiten und dem dritten Teilbild mit einem Anteil abändert, der im umgekehrten Verhältnis zu dem der Abänderung steht, welche zwischen dem ersten und dem zweiten Teilbild durchgeführt wurde.
